# EUROPÄISCHE PATENTSCHRIFT

(11) **EP 0 416 052 B1**
(45) Veröffentlichungstag und Bekanntmachung des Hinweises auf die Patenterteilung: **16.06.1993**
(21) Anmeldenummer: 90901800.4
(22) Anmeldetag: 30.01.1990
(51) Int. Cl.: A01J 25/11, A01J 25/00

(54) **VERFAHREN UND VORRICHTUNG ZUM EINFÜLLEN UND VERTEILEN VON KÄSEBRUCH IN VOR- ODER FERTIGPRESSWANNEN**
PROCESS AND DEVICE FOR FILLING AND DISTRIBUTING CHEESE CURD IN ROUGH-PRESSING OR FINAL-PRESSING BASINS
PROCEDE ET DISPOSITIF POUR REMPLIR ET REPARTIR DU CAILLE DE FROMAGE DANS DES CUVES DE PRESSURAGE PRELIMINAIRE OU FINAL

(30) Priorität: 04.02.1989 DE 3903319
(43) Veröffentlichungstag der Anmeldung: 13.03.1991
(73) Patentinhaber: SCHWARTE-WERK GmbH, D-21514 Büchen (DE)
(72) Erfinder: PUST, Manfred, D-4722 Enningerloh (DE)
(86) Internationale Anmeldenummer: EP9000161
(87) Internationale Veröffentlichungsnummer: WO9008463

(56) Entgegenhaltungen:
- EP-A- 308 035
- DE-A- 2 221 838
- DE-A- 3 316 781
- DE-A- 3 514 101
- DK-A- 8 600 548
- GB-A- 2 055 035

## Beschreibung

Die Erfindung betrifft ein Verfahren zum Einfüllen und Verteilen von Käsebruch in Vor- oder Fertigpreßwannen nach dem Oberbegriff des Anspruchs 1 und eine Vorrichtung zur Durchführung des Verfahrens nach dem Oberbegriff des Anspruchs 3.

Das Käsebruch-Molke-Gemische soll möglichst rasch in die Vor- oder Fertigpreßwannen abgefüllt werden, damit keine Kornentmischung auftritt und die Käse somit eine gleichmäßige Beschaffenheit erhalten. Lufteinschlüsse im Käsebruch sind bei bestimmten Käsesorten, beispielsweise bei Emmentaler und Edamer, zu vermeiden. Um dieses Ziel zu erreichen, wurde bereits eine Vorrichtung der einleitend gekennzeichneten Gattung vorgeschlagenen (DE-A-33 16 781), bei der ein entlang der Wanne hin und her verfahrbarer Verteilerwagen vorgesehen ist, der mehrere quer zur Fahrtrichtung im Abstand nebeneinander angeordnete, mit ihren nach unten gerichteten Auslaufenden innerhalb der Wannenkontur gelegene Abfüllrohre trägt, wobei die Auslaufenden der Abfüllrohre auf- und abbewegbar und während des Befüllens der Wanne mit Käsebruch aus einer unteren Betriebsausgangsstellung mittels eines Hubantriebes in Abhängigkeit vom fortschreitenden Füllstand der Wanne in eine obere Betriebsendstellung anhebbar sind.

Damit die sich in der Wanne bildende Käsebruchschicht frei von Lufteinschlüssen und dabei in ihrer Verteilung besonders gleichmäßig ist, wird darüber hinaus vorgeschlagen, daß die Auslaufenden der Abfüllrohre in allen Betriebsstellungen in in der Wanne enthaltene Molke eintauchen und ihre Eintauchtiefe während des Befüllvorgangs durch den Hubantrieb auf einen zumindest im wesentlichen konstanten Wert steuerbar ist.

Die bekannte Vorrichtung kann die Forderung nach gleichmäßiger Einbringung des Käsebruchs in die Wanne nur unzureichend lösen, da seine Verteilung über mehrere nebeneinander angeordnete, mit nach unten gerichteten Auslaufenden ausgestattete Abfüllrohre strömungstechnisch nahezu nicht zu lösen ist. Die Anwendung der bekannten Vorrichtung macht daher zum Zwecke der gleichmäßigen Verteilung des Käsebruchs in der Wanne zusätzlich von einem Rechen Gebrauch, der aus quer zur Fahrtrichtung des Verteilerwagens im Abstand nebeneinander angeordneten, vertikalen Stäben besteht. Das Eintauchen der Auslaufenden der Abfüllrohre in die in der Wanne enthaltene Molke verhindert zwar während des Befüllvorganges weitgehend das Eintragen von Luft aus der Umgebung in den zugeführten Käsebruch, es kann jedoch den Eintrag der mit dem Käsebruch-Molke-Gemisch mitgeführten Luft in die Wanne nicht verhindern.

Der Erfindung liegt die Aufgabe zugrunde, ein Verfahren der im Oberbegriff des Anspruchs 1 genannten Art und eine Vorrichtung zu seiner Durchführung zu schaffen, womit eine gleichmäßige und schonende, von Lufteinschlüssen freie Einbringung des Käsebruchs in die Vor- oder Fertigpreßwanne gewährleistet ist.

Diese Aufgabe löst das Verfahren nach der Erfindung mit den Merkmalen des kennzeichnenden teils des Anspruchs 1, während die Vorrichtung zur Durchführung des vorgeschlagenen Verfahrens mit den Merkmalen des kennzeichnenden teils des des Anspruchs 3 auszustatten ist. Hinsichtlich einer vorteilhaften Ausgestaltung des vorgeschlagenen Verfahrens wird auf Anspruch 2 verwiesen; vorteilhafte Ausführungsformen der Vorrichtung gemäß der Erfindung sind in den Ansprüchen 4 bis 6 beschrieben.

Das Verfahren nach der Erfindung ermöglich es, daß der Käsebruch auf seinem gesamten Transportweg von der Zufuhrstelle in die Füll- und Verteileinrichtung bis hinab in die Wanne in einer Molkesäule absinken kann. Dies ergibt zum einen eine äußerst schonende Einbringung des empfindlichen Bruchkornes. Zum anderen können Lufteinschlüsse infolge ihres Auftriebs in der Molke nach oben abgeschieden werden. Da gemäß einer vorteilhaften Ausgestaltung des Verfahrens dafür Sorge getragen wird, daß der Luftblasenaufstieg unbehindert über den gesamten vertikalen Transportweg gewährleistet ist, sammelt sich die über das Käsebruch-Molke-Gemisch mitgeführte Luft oberhalb des Molkespiegels und wird dort über die Unterdruckquelle, die die Differenz zwischen dem Molkespiegel in der Füll- und Verteileinrichtung und jenem in der Vor- oder Fertigpreßwanne bewirkt, abgesaugt. Da der Käsebruch über die gesamte Wannenbreite als ununterbrochener Strom zugeführt wird, erübrigt sich eine nachträgliche Verteilung durch mechanische Hilfsmittel, wie beispielsweise einen Rechen. Die Ausbringung des Käsebruches über die gesamte Wannenbreite wird dadurch möglich, daß das Käsebruch-Molke-Gemisch zunächst in ein Verteilergehäuse eingeleitet wird, das sich quer zur Fahrtrichtung der Füll- und Verteileinrichtung über die Wanne erstreckt und das an seiner Unterseite in seiner gesamten Länge in einen Kanal ausmündet, der nach unten gerichtet ist. Damit die Beschickung des Verteilergehäuses von vornherein unter günstigen Bedingungen stattfindet, ist nach einer weiteren Ausgestaltung der Vorrichtung gemäß der Erfindung vorgesehen, daß das Verteilergehäuse mehrere Eintrittsstutzen aufweist, die über dessen Länge verteilt angeordnet sind.

Die Verteilung wird nach einer anderen Ausgestaltung der Vorrichtung gemäß der Erfindung durch ein Förder- und Verteilrad verbessert. Dieses Rad weist eine zur Gehäuseachse parallel und exzentrisch verlaufende Achse auf, wobei es sich über die gesamte Länge des Verteilergehäuses erstreckt und mehrere über seinen Umfang gleichmäßig verteilte, sternförmig angeordnete, gleichlange Schaufeln aufweist. Der Drehsinn des Förder- und Verteilrades ist vom Eintrittsstutzen zur Oberseite des Verteilergehäuses, an der ein Entlüfungsgehäuse angeschlossen ist, gerichtet, wobei die Umrißlinien der Schaufeln das Verteilergehäuse, in Richtung des Drehsinns gesehen, zwischen dem Kanal und dem Eintrittsstutzen geradlinig berühren. Die Schaufeln des Förder- und Verteilrades übernehmen teilweise einerseits die Transportaufgabe für den Käsebruch innerhalb des Verteilergehäuses; sie haben andererseits aber hinsichtlich des zwischen ihnen abgegrenzten Käsebrurhvolumens eine Verteilerfunktion auf dem zurürkzulegenden Umfangsweg durch das Verteilergehäuse. Dabei ist vom Eintritt des Käsebruchs in das Verteilergehäuse für jeden Bereich zwischen den Schaufeln jederzeit gewährleistet, daß Lufteinschlüsse aus diesem Bereich nach oben aufsteigen und sich über dem Molkespiegel in dem Entlüftungsgehäuse abscheiden können. Dies gelingt durch die exzentrische Lagerung des Förder- und Verteilrades, welches innerhalb des Verteilergehäuses nur am einer Stelle zwischem dem Kanal und dem Eintrittstutzen, im Richtung des Drehsinns gesehen, eine geradlimige Linienberührung mit dem Verteilergehäuse aufweist.

Um das sich oberhalb des Verteilergehäuses anschließende Entlüftungsgehäuse vor Überflutung durch die Molke zu schützen, ist nach einer weiteren Ausgestaltung der Vorrirhtung gemäß der Erfindung vorgesehen, daß eine Austrittsöffnung des Entlüftungsgehäuses über ein schwimmerbetätigtes Ventil gesteuert wird. Wird der Unterdruck im Kopfraum des Verteilergehäuses größer als zur Sicherstellung der vollständigen Flutung des Ventilgehäuses mit Molke notwendig ist, dann flutet die Molke auch das sich oberhalb befindliche Entlüftungsgehäuse und gelangt über dessen Austrittsöffnung in die angeschlossene Unterdruckquelle. Um dies zu verhindern, wird die Austrittsöffnung über das vorgenannte schwimmerbetätigte Ventil gesteuert. Der Zugriff der Unterdruckquelle in das Entlüftungsgehäuse hinein wird bei Schließen des Ventils unterbrochen, so daß nunmehr, sobald Luft über das Käsebruch-Molke-Gemisch zugeführt oder aus der Molkesäule abgeschieden wird, der Flüssigkeitsspiegel im Entlüftungsgehäuse unterhalb des schwimmerbetätigten Ventils absinkt. Durch Absinken des Molkespiegels öffnet das schwimmerbetätigte Ventil, und die Unterdruckquelle kann die abgeschiedene Luft absaugen. Ein Absinken des Flüssigkeitsspiegels unterhalb des im Verteilergehäuse notwendigen Flüssigkeitniveaus wird durch ausreichende Bemessung der Unterdruckquelle hinsichtlich des von ihr zu erzeugenden Unterdruckes verhindert.

Ein Ausführungsbeispiel der Erfindung ist in der Zeichnung dargestellt und wird im folgenden näher beschrieben.

Es zeigen
- Figur 1a: einen Mittelschnitt in schematischer Darstellung durch die Vorrichtung gemäß der Erfindung;
- Figur 1b: in schematischer Darstellung eine vereinfachte Draufsicht auf wesentliche Teile der Vorrichtung gemäß Figur 1;
- Figur 1c: ebenfalls in schematischer Darstellung eine vereinfachte Seitenansicht auf wesentliche Teile der Vorrichtung gemäß Figur 1a und
- Figur 2: einen Mittelschnitt in schematicher und vergrößerter Darstellung durch eine Füll- und Vertei lereinrichtung gemäß der Erfindung mit einem Förder- und Verteilerrad.

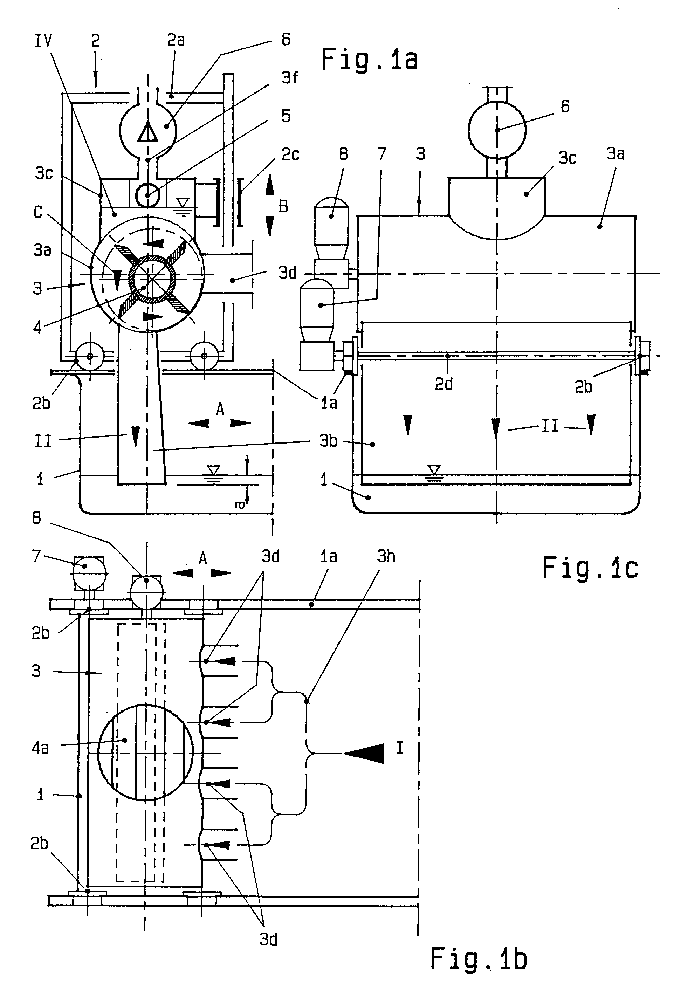

Die Vorrichtung nach der Erfindung wird unter Bezug auf ihre Darstellung in den drei Ansichten gemäß den Figuren 1a, 1b und 1c erläutert. Sie umfaßt zum Einfüllen und Verteilen von Käsebruch einen entlang einer Vor- oder Fertigpreßwanne 1 verfahrbaren Verteilerwagen 2, der mittels angetriebener Laufräder 2b auf Fahrbahnen 1a entlang der Wanne 1 hin und her verfahrbar ist. Zum Antrieb des Verteilerwagens 2 kann ein erster Antriebsmotor 7 vorgesehen sein, der eine Antriebswelle 2d für die beiderseits angeordneten Laufräder 2b antreibt. Die beiden Fahrtrichtungen des Verteilerwagens 2 veranschaulichen die Pfeile A. Innerhalb eines Rahmens 2a des Verteilerwagens 2 ist eine Füll- und Verteileinrichtung 3 angeordnet, die über eine Hubeinrichtung 2c mit den beiden Hubeinrichtungen B senkrecht zur Fahrtrichtung aus der Wanne 1 herausgehoben oder in diese abgesenkt werden kann. Die Füll- und Verteileinrichtung 3 besteht aus einem zylindrichen Verteilergehäuse 3a, das sich quer zur Fahrtrichtung A über die Wanne 1 erstreckt und das zum einen an seiner Unterseite in seiner gesamten Länge in einen Kanal 3b ausmündet. Letzterer ist nach unten gerichtet und taucht im dargestellten Ausführungsbeispiel um die Eintauchtiefe a in das in der Wanne 1 befindliche Käsebruch-Molke-Gemisch ein. An seiner Oberseite ist das Verteilgehäuse 3a mit einem Entlüftungsgehäuse 3c verbunden, das über eine in seinem Kopfraum angeordnete Austrittsöffnung 3f mit einer Unterdruckquelle 6 verbunden werden kann. Im Mittelteil des Verteilergehäuses 3a sind vier über seine Länge verteilte Eintrittsstutzen 3d angeordnet, die jweils mit einer Verteil- und Zuführeinrichtung 3h verbunden sind.

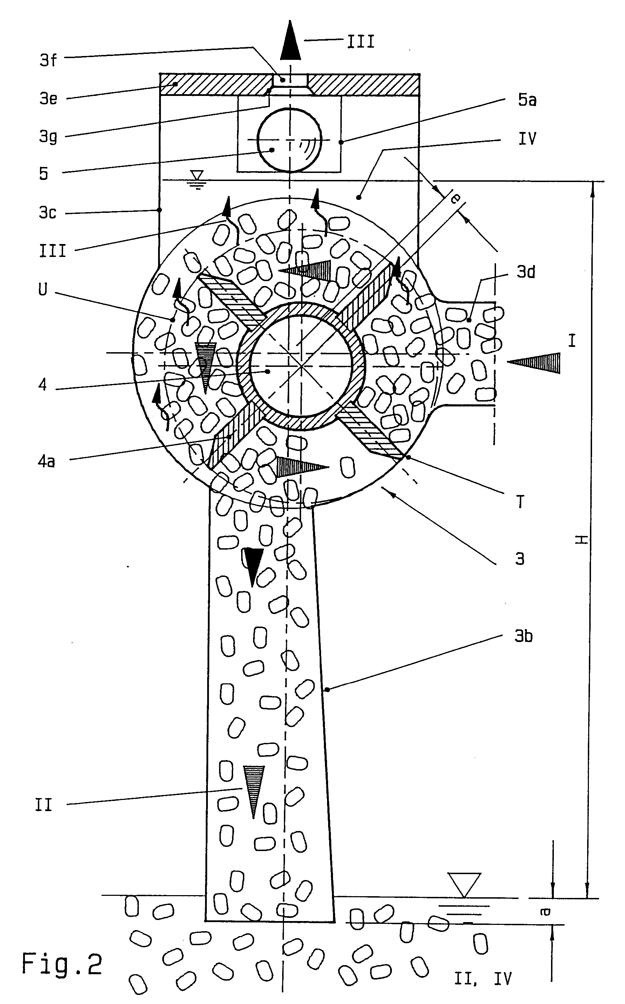

Innerhalb des Verteilergehäuses 3a ist ein Förder- und Verteilrad 4 exzentrisch angeordnet, welches eine Drehbewegung in der mit C gekennzeichneten Richtung ausführen kann. Es verfügt über mehrere über seinen Umfang gleichmäßig verteilte, sternförmig angeordnete, gleichlange Schaufeln 4a, deren Umrißlinien U (vergleiche auch Figur 2) das Verteilergehäuse 3a in Richtung des Drehsinns gesehen, zwischen dem Kanal 3b und dem Eintrittsstutzen 3d geradlinig an der mit T gekennzeichneten Stelle berühren. Die Drehbewegung des Förder- und Verteilrades 4 wird über einen zweiten Antriebsmotor 8 erzeugt.

Figur 2 veranschaulicht den Aufbau und die Funktion der Füll- und Verteileinrichtung detaillierter als die Figuren 1a, 1b und 1c. Die vorgenannte Austrittsöffnung 3f des Entlüftungsgehäuses 3c ist innerhalb eines Verschlußdekkels 3e angeordnet und mit einem Ventilsitz 3g versehen. Letzterer korrespondiert mit einem schwimmerbetägtigten Ventil 5, welches im Ausführungsbeispiel als Kugel ausgebildet und innerhalb eines Käfigs 5a in seiner Bewegung nach unten begrenzt wird. Die Achse des Förder- und Verteilrades 4 weist gegenüber der Achse des Verteilergehäuses 3a eine Exzentrizität e auf.

Über den oder die Eintrittsstutzen 3d gelangt ein Käsebruch-Molke-Gemisch I aus einem nicht näher dargestellten Käsebruch-Vorratsbehälter in die Füll- und Verteileinrichtung 3 und wird dort von den Schaufeln 4a des Förder- und Verteilrades 4 in Drehrichtung C erfaßt. Vor Einsetzen der Förderung des Käsebruch-Molke-Gemisches I hat der durch die Unterdruckquelle 6 erzeugte Unterdruck einen Anstieg des Molkespiegels aus der Wanne 1 in die Füll- und Verteileinrichtung 3 auf die Höhe H bewirkt. Der Käsebruch ist mit II gekennzeichnet, die eingeschlossenen Luftblasen, die sich in der Molkesäule IV nach oben abscheiden, tragen die Bezeichnung III. In jeder Stellung des Förder- und Verteilrades 4 weisen die Bereiche zwischen den Schaufeln 4a eine Verbindung zum Kopfraum des Verteilergehäuses 3a auf.

Erfindungsgemäß sinkt der Käsebruch II innerhalb der Molkesäule H über den Kanal 3b, der in das Käsebruch-Molke-Gemisch innerhalb der Wanne eintaucht, abwärts. Das Förder- und Verteilrad 4 unterstützt sowohl den Transport des Käsebruchs II in Umfangsrichtung durch das Verteilergehäuse 3a als auch seine Verteilung in Längsrichtung des Verteilgehäuses 3a innerhalb der durch die Schaufeln 4a abgegrenzten, jedoch stets nach oben offenen Bereiche.

Im Zuge des fortsthreitenden Befüllungsvorganges der Vor- oder Fertigpreßwanne wird die Füll- und Verteileinrichtung 3 durch die Hubeinrichtung 2c (Hubbewegung B, vergleiche Figur 1a) in der Wanne 1 angehoben und zwar derart, daß die gleithbleibende Eintauchtiefe a stets sichergestellt ist. Die Höhe H der Molkesäule bleibt bei konstantem Unterdruck über die gesamte Hubbewegung B unverändert, so daß keinerlei steuerungstechnische Eingriffe über die Unterdruckquelle 6 notwendig sind. Falls der Unterdruck im Entlüfungsgehäuse 3c über das notwendige Maß ansteigt, so daß es vollständig geflutet wird, tritt das schwimmerbetätigte Ventil 5 in Tätigkeit und verschließt die Austrittsöffnung 3f. Über die durch das Käsebruch-Molke-Gemisth I zugeführte Luft III oder über aus dem Bereich der Füll- und Verteileinrichtung 3 abgeschiedene Luft erfolgt ein Zurückdrängen des Molkespiegels, wodurch das Ventil 5 die Austrittsöffnung 3f freigibt und die Unterdruckquelle 6 die abgeschiedene Luft absaugen kann. Ein Absinken des Molkespiegels innerhalb der Füll- und Verteileinrichtung 3 unterhalb des für die erfindungsgemäße Einbringung des Käsebruchs II vorteilhaften Niveaus wird durch ausreichende Bemessung der Unterdruckquelle 6 hinsichtlich des von ihr zu erzeugenden Unterdruckes verhindert.

## Patentansprüche

1. Verfahren zum Einfüllen und Verteilen von Käsebruch in Vor- oder Fertigpreßwannen, wobei eine Füll- und Verteileinrichtung, die mit den Enden ihrer Abfüllorgane in allen Betriebsstellungen in die in der Vor- oder Fertigpreßwanne enthaltene Molke eintaucht und die an einen Käsebruch-Vorratsbehälter angeschlossen und aus diesem mittels einer Fördereinrichtung beschickt wird, **dadurch gekennzeichnet,** daß durch Unterdruckerzeugung im Kopfraum der Füll- und Verteileinrichtung ein Anstieg des Molkespiegels in dieser gegenüber dem Molkespiegel in der Vor- oder Fertigpreßwanne bewirkt wird, und daß der Käsebruch über die gesamte Wannenbreite ausgebracht wird, wobei er in der Molkesäule der Füll- und Verteileinrichtung von seiner Zuführstelle bis in die Wanne absinkt.

2. Verfahren nach Anspruch 1, **dadurch gekennzeichnet**, daß mit dem Käsebruch in die Füll- und Verteileinrichtung eingetragene Luft durch unbehinderten Aufstieg in der Molkesäule ausgetragen und oberhalb des Molkespiegels abgesaugt wird.

3. Vorrichtung zur Durchführung des Verfahrens nach Anspruch 1 oder 2, mit einer entlang der Wanne hin- und her verfahrbaren Füll- und Verteileinrichtung zum Ausbringen des Käsebruchs, die quer zur Fahrtrichtung innerhalb der Wannenkontur den Käsebruch ausbringt, **dadurch gekennzeichnet**, daß die Füll- und Verteileinrichtung (3) höhenverfahrbar ausgebildet und an ihrem Kopfraum eine Unterdruckquelle (6) angeschlossen ist, daß die Füll- und Verteileinrichtung (3) ein Verteilergehäuse (3a) aufweist, das sich quer zur Fahrtrichtung über die Wanne (1) erstreckt, das zum einen an seiner Unterseite in seiner gesamten Länge in einen nach unten gerichteten Kanal (3b) ausmündet, das zum andern an seiner Oberseite mit einem an die Unterdruckquelle (6) angeschlossenen Entlüftungsgehäuse (3c) verbunden ist und das in seinem Mittelteil wenigstens einen Eintrittsstutzen (3d) aufweist.

4. Vorrichtung nach Anspruch 3, **dadurch gekennzeichnet**, daß die Eintrittsstutzen (3d) über die Länge des Verteilergehäuses (3a) verteilt angeordnet sind.

5. Vorrichtung nach Anspruch 3 oder 4, **dadurch gekennzeichnet**, daß das Verteilergehäuse (3a) zylindrisch ausgebildet ist und ein Förder- und Verteilrad (4) aufnimmt, dessen Drehsinn vom Eintrittsstutzen (3d) zum Entlüftungsgehäuse (3c) gerichtet ist und dessen Achse parallel und exzentrisch zur Achse des Verteilergehäuses verläuft, das sich über die gesamte Länge des Gehäuses erstreckt und das mehrere über seinen Umfang gleichmäßig verteilte, sternförmig angeordnete, gleichlange Schaufeln (4a) aufweist, deren Umrißlinien (U) das Verteilergehäuse (3a), in Richtung des Drehsinns gesehen, zwischen dem Kanal (3b) und dem Eintrittsstutzen (3d) geradlinig berühren.

6. Vorrichtung nach einen der Ansprüche 3 bis 5, **dadurch gekennzeichnet**, daß eine Austrittsöffnung (3f) im Entlüftungsgehäuse (3c) über ein schwimmerbetätigtes Ventil (5) gesteuert wird.

## Claims

1. A process for filling and distributing cheese curd in rough-pressing or final-pressing basins, wherein a filling and distribution device is immersed in all operating positions with the end portions of its filling means in the whey contained in the rough-pressing or final pressing basin, said filling and distribution device being connected to a cheese curd supply container from which it receives cheese curd via a conveying means,
**characterized** in that, due to a negative pressure being generated in the head section of said filling and distribution device, the level of the whey contained in the latter is caused to raise as compared to the level of the whey contained in the rough-pressing or final-pressing basin, and in that the cheese curd is discharged over the entire basin width, thus causing it to sink in the whey column in the filling and distribution device from the location of delivery down to the basin.

2. The process of claim 1, characterized in that air which is introduced into the filling and distribution device with the cheese curd is removed in that it is allowed to rise unrestrictedly in the whey column and is drawn off above the whey level.

3. A device for implementing the process of claim 1 or 2, comprising a filling and distribution device capable of being moved back and forth along said basin for discharging the cheese curd, said filling and distribution device discharging the cheese curd within the basin contour transversely of its direction of movement, characterized in that the filling and distribution device (3) is vertically adjustable and the head section thereof is connected to a negative pressure source (6), in that the filling and distribution device (3) comprises a distribution chamber (3a) extending transversely of the direction of movement across the basin (1) and, on the one hand, terminating at its underside over its entire length into a downwardly disposed channel (3b) and, on the other hand, being connected at its upper side to a ventilation chamber (3c) connected to the negative pressure source (6) and comprising in its central portion at least one input connecting piece (3d).

4. The device of claim 3, characterized in that the input connecting pieces (3d) are distributed over the length of the distribution chamber (3a).

5. The device of claim 3 or 4, characterized in that the distribution chamber (3a) is of cylindrical shape and accommodates a conveying and distribution wheel (4) whose sense of rotation is oriented from the input connecting piece (3d) to the ventilation chamber (3c) and whose axis extends in parallel and eccentric relationship to the axis of the distribution chamber, said wheel extending over the entire length of said chamber and comprising a multiplicity of blades (4a) of equal length which are radially arranged and uniformly distributed over the circumference thereof, the contour line (U) of said blades contacting the distribution chamber (3a), viewed in the sense of rotation, between the channel (3b) and the input connecting piece (3d) in straight line.

6. The device of one of claims 3 to 5, characterized in that an output opening (3f) in the ventilation chamber (3c) is controlled through a plunger-operated valve (5).

## Revendications

1. Procédé de remplissage et de répartition de caillé de fromage dans des cuves de pressage préliminaire ou final, selon lequel un dispositif de remplissage et de répartition, qui, dans toutes les positions de fonctionnement, plonge, par l'extrémité de son organe de sortie, dans le petit-lait contenu dans la cuve de pressage préliminaire ou final, est raccordé à un récipient de stockage du caillé de fromage et est alimenté à partir de celui-ci au moyen d'un dispositif de transfert,
caractérisé en ce qu'en réalisant une dépression à la partie supérieure du dispositif de remplissage et de répartition, on provoque une montée du niveau du petit-lait dans celui-ci au dessus du niveau de ce petit-lait dans la cuve de pressage préliminaire ou final, et en ce que le caillé de fromage est réparti sur toute la surface de la cuve, alors que, dans la colonne de petit lait du dispositif de remplissage et de répartition, il plonge depuis son point d'alimentation jusque dans la cuve.

2. Procédé suivant la revendication 1, caractérisé en ce que de l'air, entraîné avec le caillé de fromage dans le dispositif de remplissage et de répartition, du fait de sa libre ascension dans la colonne de petit lait, est extrait et est aspiré au-dessus du niveau du petit lait.

3. Dispositif pour la mise en oeuvre du procédé suivant la revendication 1 ou la revendication 2, comportant, un dispositif de remplissage et de répartition mobile à va-et-vient le long de la cuve pour extraire le caillé de fromage, dispositif qui distribue le caillé de fromage à l'intérieur du contour de la cuve, transversalement par rapport à sa direction de déplacement,
caractérisé en ce que le dispositif (3) de remplissage et de répartition est réalisé pour pouvoir être déplacé en hauteur et est relié par sa partie supérieure à une source de dépression (6), en ce que le dispositif (3) de remplissage et de répartition comprend un boîtier de répartition (3a) s'étendant au-dessus de la cuve, transversalement à la direction de déplacement, et qui, d'une part, débouche, à sa face inférieure, sur toute sa longueur, dans un canal (3b) dirigé vers le bas, et d'autre part, est relié à sa face supérieure, à un boîtier de dégazage (3c), lui-même raccordé à la source de dépression (6), ce boîtier présentant, à sa partie centrale, au moins un raccord d'entrée (3d).

4. Dispositif suivant la revendication 3, caractérisé en ce que les raccords d'entrée (3d) sont répartis sur toute la longueur du boîtier de répartition (3a).

5. Dispositif suivant la revendication 3 ou la revendication 4, caractérisé en ce que le boîtier de répartition (3a) est réalisé cylindrique et reçoit une roue de transfert et de répartition (4), dont le sens de rotation est dirigé du raccord d'entrée (3d) vers le boîtier de dégazage (3c), dont l'axe est dirigé parallèlement à l'axe du boîtier de répartition et excentré par rapport à cet axe, qui s'étend sur toute la longueur du boîtier et présente plusieurs palettes (4a) de même longueur, disposées en étoile et réparties régulièrement sur sa périphérie, dont les lignes de contour (U) touchent, suivant une ligne droite, le boîtier de répartition (3a) entre le canal (3b) et le raccord d'entrée (3d), quand on suit le sens de rotation.

6. Dispositif suivant l'une quelconque des revendications 3 à 5, caractérisé en ce qu'un orifice d'évacuation (3f) dans le boîtier de dégazage (3c) est commandé au moyen d'une soupape (5) actionnée par flotteur.
